# EUROPÄISCHE PATENTSCHRIFT

(11) **EP 2 383 067 B1**
(45) Veröffentlichungstag und Bekanntmachung des Hinweises auf die Patenterteilung: **31.10.2012**
(21) Anmeldenummer: 11163630.4
(22) Anmeldetag: 26.04.2011
(51) Int. Cl.: B23K 26/08, G02B 26/12, B29C 59/00, B23K 26/42

(54) **Vorrichtung zum Einbringen von voneinander in einer Längsrichtung beabstandeten Nuten oder Schlitzen in eine in diese Längsrichtung bewegte Materialbahn mit einem Laserstrahl**
Device for inserting notches or slits separated from each other in a longitudinal direction in a sheet of material moved in this longitudinal direction using a laser beam
Dispositif d'introduction de rainures ou de fentes distancées les unes des autres dans le sens longitudinal dans une bande de matériau se déplaçant dans ce sens longitudinal à l'aide d'un rayon laser

(30) Priorität: 30.04.2010 DE 102010028469
(43) Veröffentlichungstag der Anmeldung: 02.11.2011
(73) Patentinhaber: Rofin-Baasel Lasertech GmbH & Co. KG, 82319 Starnberg (DE)
(72) Erfinder: Pollak, Armin, 82335 Berg (DE); Wurzer, Günter, 80335 München (DE)
(74) Vertreter: Mörtel & Höfner

(56) Entgegenhaltungen:
- DE-A1-102004 012 081
- JP-A- 2008 026 661
- US-A1- 2007 075 063
- US-B2- 6 600 152

## Beschreibung

Die Erfindung bezieht sich auf eine Vorrichtung zum Einbringen von voneinander in einer Längsrichtung beabstandeten Nuten oder Schlitzen in eine in diese Längsrichtung bewegte Materialbahn mit einem Laserstrahl.

Die DE 10 2004 012081 A1 offenbart eine solche Vorrichtung zum Einbringen von voneinander in einer Längsrichtung beabstandeten Nuten oder Schlitzen in eine in diese Längsrichtung bewegte Materialbahn mit einem Laserstrahl, mit einer Laserstrahlquelle zum Erzeugen eines kontinuierlichen Laserstrahls und einem um eine Rotationsachse rotierenden angeordneten Ablenkspiegel mit einer Spiegelfläche, deren Schnittlinie mit einer Schnittebene senkrecht zur Rotationsachse einen Kreisbogen um die Rotationsachse bildet, dessen Bogenwinkel in Abhängigkeit von der axialen Position der Schnittebene variiert, und die den Laserstrahl in eine Richtung ablenkt, und mit einer Fokussieroptik zum Fokussieren des von der Spiegelfläche reflektierten Laserstrahls auf die Materialbahn.

Verpackungsfolien, insbesondere Verpackungsfolien für die Verpackung von Lebensmitteln, werden in einer Vielzahl von Anwendungsfällen mit voneinander beabstandeten Längsnuten versehen, die als Aufreißhilfe dienen. Diese Längsnuten erstrecken sich nur bis zu einer bestimmten Tiefe, so dass die Barriereeigenschaften der Verpackungsfolie aufrechterhalten bleiben, um das verpackte Lebensmittel vor Licht, Sauerstoff, Feuchtigkeit, Austrocknung, Verunreinigung oder Aromaverlust zu schützen.

Das Einbringen derartiger Nuten erfolgt in vielen Fällen mit Hilfe eines fokussierten Laserstrahls, während die Verpackungsfolie von einer Vorrats- auf eine Aufwickelrolle gewickelt wird.

Um in eine derartige bewegte Materialbahn mit Hilfe eines Laserstrahls Nuten mit konstanter Länge, konstanter Tiefe und konstantem Abstand einbringen zu können, ist es bekannt, eine Laserstrahlquelle zu verwenden, die einen gepulsten Laserstrahl erzeugt, dessen Frequenz und Pulsdauer mit der sich ändernden Geschwindigkeit der Materialbahn variiert wird, wobei zugleich die Laserleistung pro Puls konstant gehalten werden muss. Dabei hat sich herausgestellt, dass ein derartiges Verfahren die in der Praxis gestellten Anforderungen - Variation der Bahngeschwindigkeit von 2 - 10 m/s, Verstellung des duty cycle (Produkt aus Pulsdauer und Pulsfrequenz) in einem Frequenzbereich von 5 - 100 kHz sowie für Pulsdauern zwischen 5 und 100 µs bei gleichzeitiger Aufrechterhaltung der Laserleistung pro Puls - nicht oder nur mit sehr hohem technischen Aufwand zu erfüllen sind.

Alternativ hierzu ist es auch möglich, aus einem kontinuierlichen Laserstrahl mit Hilfe einer rotierenden Blendenscheibe, beispielsweise eine Finger- oder Lochscheibe, einen gepulsten Laserstrahl zu erzeugen. Hierbei wird der Laserstrahl durch eine Linse auf die Blendenscheibe fokussiert. Die Blendenscheibe ist unter einem spitzen Winkel zur Stahlachse angestellt. Trifft der Strahl einen Finger, so wird die Energie durch Reflektion am Finger in einen Absorber gelenkt und thermisch vernichtet. Durch eine nach der Blendenscheibe angeordnete Linse wird der nun gepulste Laserstrahl wieder parallelisiert und kann über Umlenkspiegel zum Arbeitspunkt gelenkt werden. Eine weitere Linse fokussiert den parallelisierten Laserstrahl dann auf die Materialbahn. Über das Verhältnis zwischen Finger- und Schlitzbreite ergibt sich der duty cycle, wobei eine veränderliche Bahngeschwindigkeit über eine Mitführung der Rotationsgeschwindigkeit der Blendenscheibe ausgeglichen wird.

Nachteilig bei diesem Verfahren ist, dass die Kanten der Blenden einer extremen thermischen Belastung unterliegen, so dass die Standzeit der Blendenscheibe bei Leistungen im Kilowatt-Bereich stark reduziert ist. Darüber hinaus lässt sich eine in der Praxis häufig geforderte stufenlose Verstellung des duty cycle nur schwer realisieren.

Der Erfindung liegt daher die Aufgabe zugrunde, eine Vorrichtung zum Einbringen von voneinander in einer Längsrichtung beabstandeten Nuten oder Schlitzen in eine in diese Längsrichtung bewegte Materialbahn mit einem Laserstrahl anzugeben, mit der es möglich ist, die eingangs geschilderten praktischen Anforderungen mit geringem technischen Aufwand zu erfüllen.

Die genannte Aufgabe wird gemäß der Erfindung gelöst, mit einer Vorrichtung mit den Merkmalen des Patentanspruches 1. Gemäß diesen Merkmalen umfasst die Vorrichtung eine Laserstrahlquelle zum Erzeugen eines kontinuierlichen Laserstrahls und einen um eine Rotationachse rotierenden in deren Richtung verschiebbar angeordneten Ablenkspiegel mit wenigstens einer ersten Spiegelfläche, deren Schnittlinie mit einer Schnittebene senkrecht zur Rotationsache einen Kreisbogen um die Rotationsachse bildet, dessen Bogenwinkel in Abhängigkeit von der axialen Position der Schnittebene variiert, und die den Laserstrahl in eine erste Richtung ablenkt, sowie mit zumindest einer zweiten Spiegelfläche, die den Laserstrahl in davon abweichende zweite Richtungen zu einem Absorber ablenkt, wobei der von der ersten Spiegelfläche reflektierte Laserstrahl mit Hilfe einer Fokussieroptik auf die Materialbahn fokussiert wird.

Durch diese Maßnahmen ist es durch einfache axiale Verschiebung des Ablenkspiegels möglich, den duty cycle des auf die Materialbahn auftreffenden Laserstrahls zu ändern, da der Bogenwinkel der ersten Spiegelfläche von der axialen Position, in der der vorzugsweise zumindest annähernd auf die erste Spiegelfläche fokussierte Laserstrahl auf den Ablenkspiegel trifft, abhängt.

Wenn der Bogenwinkel der ersten Spiegelfläche in einer zur Rotationsachse parallelen Richtung stetig abnimmt, kann der duty cycle stufenlos verändert werden.

Vorzugsweise grenzen erste und zweite Spiegelflächen unmittelbar aneinander. Mit anderen Worten: Zwischen den Spiegelflächen gibt es keine Zwischenbereiche, so dass der Laserstrahl stets entweder auf die erste oder zweite Spiegelfläche trifft.

Wenn die zweite Spiegelfläche eben und schräg zur Rotationsachse orientiert ist, kann ein Ablenkspiegel gemäß der vorliegenden Erfindung besonders einfach hergestellt werden, indem in einen kreiszylindrischen Grundkörper entsprechende Flächen durch Planfräsen eingebracht werden.

Weitere vorteilhafte Ausgestaltungen der Erfindung sind in den weiteren Unteransprüchen angegeben.

Zur weiteren Erläuterung der Erfindung wird auf das in den Figuren dargestellte Ausführungsbeispiel verwiesen. Es zeigen:
- Fig. 1: eine Vorrichtung gemäß der Erfindung in einer schematischen Prinzipskizze in einer ersten Position des Ablenkspiegels, in der der Laserstrahl auf die Materialbahn gelenkt wird,
- Fig. 2: den Ablenkspiegel in einer zweiten Position, in der der auf ihn auftreffende Laserstrahl auf einen Absorber gelenkt wird,
- Fig. 3: einen Ablenkspiegel gemäß der vorliegenden Erfindung in einer perspektivischen Darstellung,
- Fig. 4: eine teilweise Seitenansicht und einen teilweisen Längsschnitt des Ablenkspiegels,
- Fig. 5: den Ablenkspiegel in einem Querschnitt,
- Fig. 6: eine Ausführungsform, bei der zwei Ablenkspiegel auf einer gemeinsamen Welle angeordnet sind,
- Fig. 7: ein mit der Anordnung gemäß Fig. 6 erzeugtes Perforations- oder Ritzmuster,
- Fig. 8: eine weitere vorteilhafte Ausgestaltung der Erfindung mit einem im Strahlengang des Laserstrahls angeordneten akustooptischen Modulator,
- Fig. 9: ein Beispiel eines mit der Anordnung gemäß Fig. 8 erzeugten Perforations- oder Ritzmusters,
- Fig. 10: eine Ausführungsform mit einem im Strahlengang des Laserstrahls schwenkbar angeordneten Umlenkspiegel,
- Fig. 11: ein mit der Anordnung gemäß Fig. 10 erzeugtes Perforations- oder Ritzmuster,
- Fig. 12: eine Ausführungsform, bei der im Strahlengang des Laserstrahls ein rotierender Polygonspiegel angeordnet ist,
- Fig. 13: ein mit der Ausführungsform gemäß Fig. 12 erzeugtes Perforations- oder Ritzmuster.

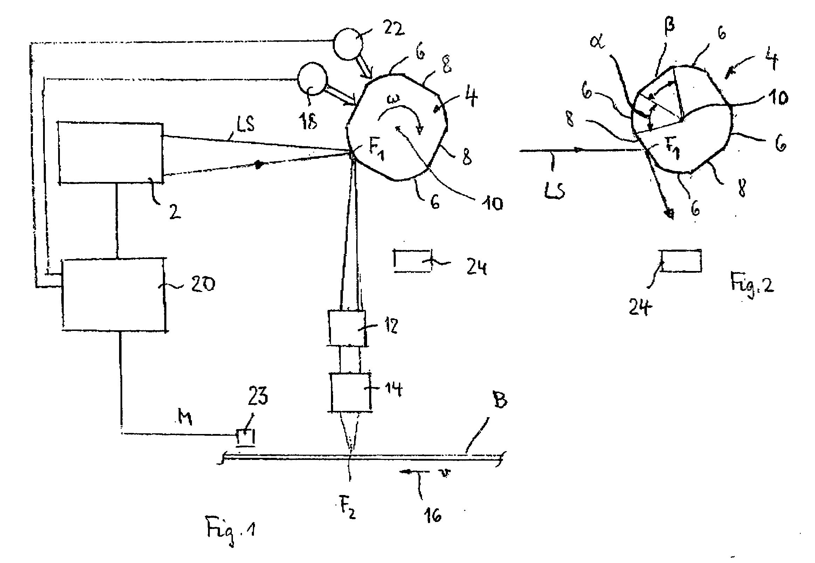

Gemäß Fig. 1 umfasst die Vorrichtung eine Laserstrahlquelle 2, die mit einer nicht näher dargestellten Fokussieroptik einen Laserstrahl LS erzeugt, der in einem ersten Fokus F₁ fokussiert ist. Im Strahlengang des Laserstrahls LS befindet sich ein eine Mehrzahl von Spiegelflächen aufweisender Ablenkspiegel 4, der im Ausführungsbeispiel vier erste Spiegelflächen 6 sowie vier zweite Spiegelflächen 8 aufweist, die bei Rotation des Ablenkspiegels 4 um eine senkrecht zur Zeichenebene stehende Rotationsachse 10 abwechselnd in den Strahlengang des Laserstrahls LS gelangen. Die ersten Spiegelflächen 6 haben in einer zur Rotationsachse 10 senkrecht Schnittebene - die Zeichenebene - die Gestalt eines Kreisbogens, dessen Mittelpunkt auf der Rotationsachse 10 liegt. Die ersten Spiegelflächen 6 erstrecken sich außerdem parallel zur Rotationsachse 10, so dass sie auf einer Mantelfläche eines Kreiszylinders liegen, dessen Zylinderachse mit der Rotationsachse 10 zusammenfällt. Zumindest die ersten Spiegelflächen 6 befinden sich annähernd im ersten Fokus F₁ des Laserstrahls LS.

Die zweiten Spiegelflächen 8 sind eben und verlaufen schräg zur Rotationsachse 10, d. h. schräg zur Zeichenebene. Erste und zweite Spiegelflächen 6 und 8 wechseln sich in Umfangsrichtung ab und grenzen unmittelbar aneinander.

Der auf die kreisbogenförmigen ersten Spiegelflächen 6 auftreffende Laserstrahl LS wird in eine erste, feststehende Richtung zu einer Kollimieroptik 12 abgelenkt, in der er parallelisiert wird. Mit einer Fokussieroptik 14 wird der Laserstrahl LS in einem zweiten Fokus F₂ auf eine Materialbahn B fokussiert, die sich in eine Längsrichtung 16 vorwärtsbewegt. Zwischen Kollimieroptik 12 und Fokussieroptik 14 können sich außerdem noch plane Umlenkspiegel befinden, mit denen der kollimierte Laserstrahl LS entsprechend der Lage und Orientierung der Materialbahn B geführt werden kann.

Der rotierende Ablenkspiegel 4 wird von einer Antriebseinheit 18 angetrieben, die von einer Steuereinrichtung 20 gesteuert wird. Mit Hilfe eines ebenfalls von der Steuereinrichtung 20 steuerbaren Linearantriebes 22 kann der Ablenkspiegel 4 außerdem noch in Richtung der Rotationsachse 10, d.h. senkrecht zur Zeichenebene verschoben werden.

Mit Hilfe eines Messwertaufnehmers 24 wird die aktuelle Bahngeschwindigkeit v der Materialbahn B erfasst und ein entsprechendes Messsignal M an die Steuereinrichtung 20 weitergeleitet, mit der die Laserleistung sowie die Rotationsgeschwindigkeit ω des Ablenkspiels 4 in Abhängigkeit von der Bahngeschwindigkeit v der Materialbahn B gesteuert wird.

Mit Hilfe der axialen Position des Ablenkspiegels 4 wird, wie nachstehend erläutert, der duty cycle des Laserstrahls LS auf der Materialbahn B eingestellt.

Fig. 2 stellt eine Betriebssituation dar, bei der sich der Ablenkspiegel 4 gegenüber der in Fig. 1 dargestellten Betriebssituation weitergedreht hat, so dass der Laserstrahl LS nicht mehr auf die kreisbogenförmige erste Spiegelfläche 6 sondern auf die plane zweite Spiegelfläche 8 auftrifft. Da die plane zweite Spiegelfläche 8 schräg zur Zeichenebene orientiert ist, wird der Laserstrahl LS aus der Zeichenebene heraus in von der ersten Richtung abweichende zweite Richtungen abgelenkt, in denen er auf einen Absorber 24 trifft. Der duty cycle wird dementsprechend durch das Verhältnis der Bogenwinkel α und β bestimmt, die der ersten bzw. zweiten Spiegelfläche 6 bzw. 8 zugeordnet sind. Die ersten Spiegelflächen 6 weisen in einer Schnittebene senkrecht zur Rotationsachse 10 jeweils denselben Bogenwinkel α und die zweiten Spiegelflächen jeweils denselben Bogenwinkel β auf. Da erste und zweite Spiegelflächen 6, 8 unmittelbar aneinandergrenzen, beträgt das Vierfache der Summe aus den Bogenwinkeln α und β 360°.

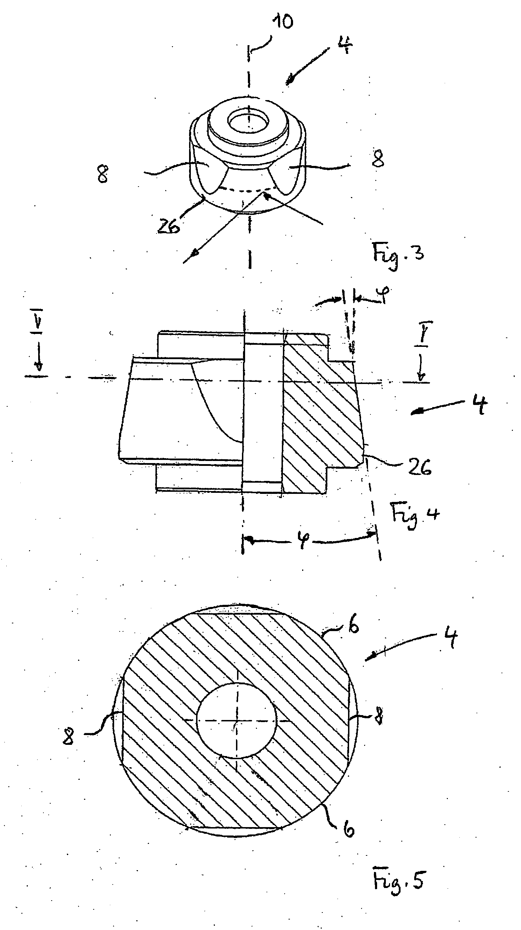

In der perspektiven Darstellung gemäß Fig. 3 ist zu erkennen, dass der Ablenkspiegel 4 eine im Wesentlichen zylindrische Grundform aufweist, in die schräg zur Rotations- bzw. Zylinderachse 10 verlaufende ebene zweite Spiegelflächen 8 in Form von Ausnehmungen oder Vertiefungen eingebracht sind. Der Figur ist zu entnehmen, dass der Bogenwinkel α bzw. die Bogenlänge der ersten Spiegelflächen 8 in einer zur Rotationsachse 10 senkrechten Schnittebene mit der axialen Position der Schnittebene variiert, im Beispiel bezogen auf die Figur in Richtung der Rotationsachse 10 stetig von unten nach oben zunimmt, so dass der duty cycle des für die Bearbeitung der Materialbahn genutzten Laserstrahls LS davon abhängt, in welcher axialen Position der von der Laserstrahlquelle erzeugte Laserstrahl LS auf den Ablenkspiegel 4 auftrifft. Durch Verschieben des Ablenkspiegels 4 in eine Richtung parallel zur Rotationsachse 10 lässt sich somit der duty cycle auf einfache Weise stufenlos einstellen.

In den Fig. 3 und 4 ist außerdem zu erkennen, dass der Ablenkspiegel 4 einen Bereich 26 aufweist, in dem er auf seinem gesamten Umfang kreiszylindrisch ist, so dass mit einem in diesem Bereich 26 auf den Ablenkspiegel 4 auftreffenden Laserstrahl LS eine zusammenhängende Ritzlinie in der Materialbahn erzeugt wird. Mit anderen Worten: Der Winkel ϕ, mit dem die zweiten Spiegelflächen 8 gegen die Rotationsachse 10 geneigt ist sowie die Tiefe der durch die zweiten Spiegelflächen 8 gebildeten Ausnehmung ist derart eingestellt, dass ein auf dem gesamten Umfang kreiszylindrischer Bereich 26 verbleibt.

Der Querschnitt gemäß Fig. 5 ist in eine Schnittebene gelegt, in der die Bogenwinkel α, β von erster bzw. zweiter Spiegelfläche gleich groß sind und jeweils 45° betragen. Mit einem in dieser Schnittebene auf den Ablenkspiegel auftreffenden Laserstrahl wird dementsprechend ein duty cycle von 50% erzeugt.

Da die erste Spiegelfläche 6 eine Zylinderfläche ist, hat der Laserstrahl LS nach seiner Reflektion an dieser in der Zeichenebene eine andere Divergenz als senkrecht dazu. Die Kollimieroptik 12 ist deshalb aus wenigstens zwei asphärischen Linsen oder einer toroidalen Linse aufgebaut, um den Laserstrahl LS in beiden Ebenen zu parallelisieren.

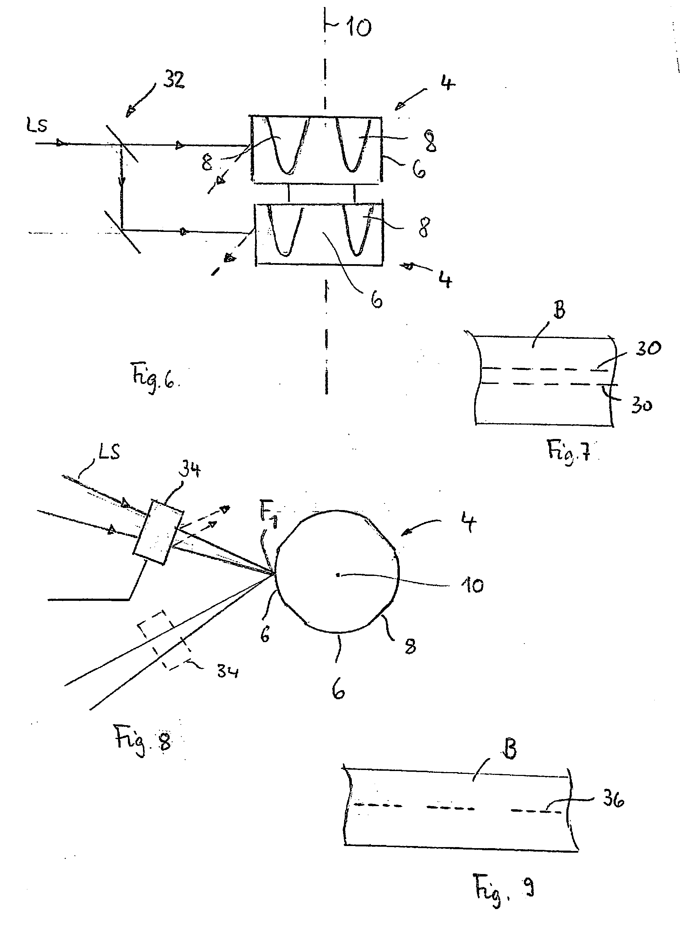

Im Ausführungsbeispiel gemäß Fig. 6 sind eine Mehrzahl von Ablenkspiegeln 4, in der Figur sind aus Gründen der Übersichtlichkeit nur zwei dargestellt, auf einer gemeinsamen Welle angeordnet, so dass sie um eine gemeinsame Rotationachse 10 rotieren. Auf jeden dieser Ablenkspiegel 4 trifft ein Laserstrahl LS, so dass auf der Materialbahn B eine Mehrzahl von, im Beispiel zwei, parallelen Perforations- oder Ritzspuren 30 erzeugt werden (Fig. 7). Die Mehrzahl von Laserstrahlen LS kann entweder, wie dies in Figur 6 dargestellt ist, mittels einer Strahlteilereinrichtung 32 oder mit Hilfe einer entsprechenden Anzahl von Laserstrahlquellen erzeugt werden.

Die Erzeugung mehrerer zueinander paralleler Perforations-oder Ritzspuren kann auch mit einem im Strahlengang des von der Spiegelfläche 6 eines einzigen Ablenkspiegels 4 angeordneten diffraktiven optischen Element erfolgen, das aus einem Strahl einen Mehrfachstrahl erzeugt. Der Einsatz eines derartigen diffraktiven optischen Elements zum Erzeugen eines Mehrfachstrahls ist beispielsweise aus der EP 0 734 809 A1 für die Perforation einer Papierbahn bekannt.

Im Ausführungsbeispiel gemäß Fig. 8 ist im Strahlengang des sich zum Ablenkspiegel 4 ausbreitenden Laserstrahls LS ein akustooptischer Modulator 34 vorgesehen, mit dem der Laserstrahl bei entsprechender Ansteuerung so abgelenkt werden kann, dass er nicht mehr als Nutzstrahl zur Verfügung steht, sondern auf einen in der Figur nicht dargestellten Absorber trifft. Der akustooptische Modulator 34 ist vorzugsweise in einem Bereich des Strahlengangs angeordnet, in dem der Strahlquerschnitt des Laserstrahls entsprechend klein ist, um vollständig in den in seinen geometrischen Abmessungen begrenzten akustooptischen Modulator eingekoppelt werden zu können. Dies ist beispielsweise in der Nähe eines Fokus des Laserstrahls LS der Fall, beispielsweise vor oder nach dem annähernd auf dem Ablenkspiegel 4 befindlichen ersten Fokus F₁ oder aber zwischen der Fokussieroptik 14 und der Materialbahn B (Fig. 1). In der Fig. 8 ist der akustooptische Modulator 34 gestrichelt in einer alternativen Position eingezeichnet, bei der er sich im Strahlengang des von der ersten Spiegelfläche 6 reflektierten Laserstrahls LS befindet. Der akustooptische Modulator 34 dient als Schalter, so dass sich mit diesem eine unterbrochene Perforations- bzw. Ritzspur 36 erzeugen lässt (Fig. 9).

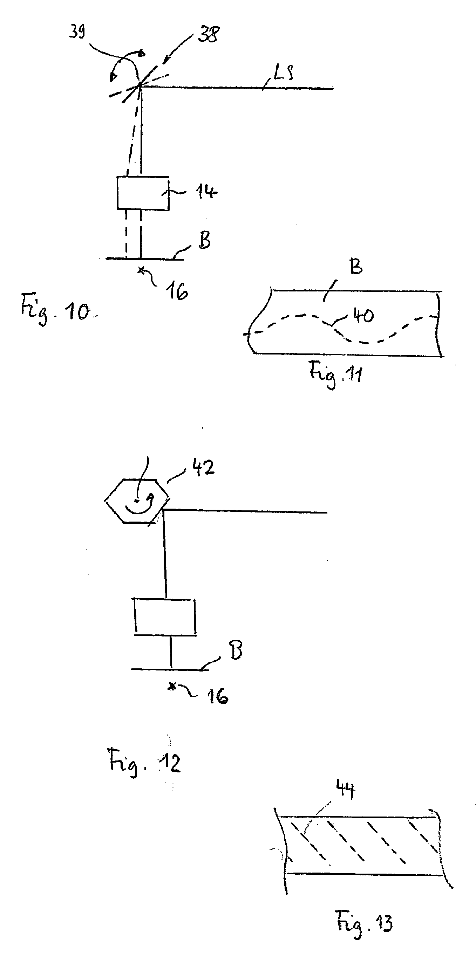

Im Ausführungsbeispiel der Fig. 10 ist ein der Fokussieroptik 14 vorgelagerter Umlenkspiegel 38 vorgesehen, der um eine parallel zur Längsrichtung 16 orientierte Drehachse 39 geschwenkt werden kann. Schwenkwinkel und Fokussieroptik 14 sind dabei derart aufeinander abgestimmt, dass der Laserstrahl LS stets durch ein und dieselbe Fokussieroptik 14 fokussiert wird. Mit einer solchen Anordnung ergibt sich eine etwa sinusförmige Perforations- bzw. Ritzspur 40, wie dies in Fig. 11 veranschaulicht ist.

Gemäß Fig. 12 ist der Fokussieroptik 14 ein Polygonspiegel 42 vorgelagert, der ebenfalls um eine zur Längsrichtung 16 der Materialbahn B parallele Drehachse 43 rotiert. Mit dieser Anordnung ergibt sich eine in Fig. 14 dargestellte sägezahnförmige Perforations- bzw. Ritzspur 44.

## Patentansprüche

1. Vorrichtung zum Einbringen von voneinander in einer Längsrichtung (16) beabstandeten Nuten oder Schlitzen in eine in diese Längsrichtung (16) bewegte Materialbahn (B) mit einem Laserstrahl (LS), mit einer Laserstrahlquelle (2) zum Erzeugen eines kontinuierlichen Laserstrahls (LS), einem Absorber (24) und einem um eine Rotationsachse (10) rotierenden und in deren Richtung verschiebbar angeordneten Ablenkspiegel (4) mit wenigstens einer ersten Spiegelfläche (6), deren Schnittlinie mit einer Schnittebene senkrecht zur Rotationsachse (10) einen Kreisbogen um die Rotationsachse (10) bildet, dessen Bogenwinkel (α) in Abhängigkeit von der axialen Position der Schnittebene variiert, und die den Laserstrahl (LS) in eine erste Richtung ablenkt, sowie mit zumindest einer zweiten Spiegelfläche (8), die den Laserstrahl in davon abweichende zweite Richtungen zu dem Absorber (24) ablenkt, und mit einer Fokussieroptik (14) zum Fokussieren des von der ersten Spiegelfläche (6) reflektierten Laserstrahls (LS) auf die Materialbahn (B).

2. Vorrichtung nach Anspruch 1, bei der erste und zweite Spiegelfläche (6,8) unmittelbar aneinander grenzen.

3. Vorrichtung nach Anspruch 1 oder 2, bei der der Bogenwinkel (α)der ersten Spiegelfläche (6) in einer zur Rotationsachse (10) parallelen Richtung stetig abnimmt.

4. Vorrichtung nach Anspruch 1, 2 oder 3, bei der die zweite Spiegelfläche (8) eben und schräg zur Rotationsachse (10) orientiert ist.

5. Vorrichtung nach einem der vorhergehenden Ansprüche, deren Ablenkspiegel (4) eine Mehrzahl erster Spiegelflächen (6) aufweist, zwischen denen sich jeweils eine zweite Spiegelfläche (8) befindet.

6. Vorrichtung nach einem der vorhergehenden Ansprüche, bei der die Fokussieroptik (14) eine toroidale Linse umfasst.

7. Vorrichtung nach einem der vorhergehenden Ansprüche, bei der im Strahlengang des sich zum Ablenkspiegel (4) ausbreitenden oder von der ersten Spiegelfläche (6) reflektierten Laserstrahls (LS) ein akustooptischer Modulator (34) angeordnet ist.

8. Vorrichtung nach einem der vorhergehenden Ansprüche, bei der der von der Laserstrahlquelle (2) erzeugte Laserstrahl (LS) in einem ersten Fokus (F₁) fokussiert ist, in dem wenigstens annähernd die erste Spiegelfläche (6) angeordnet ist.

9. Vorrichtung nach Anspruch 8, bei der der zumindest einen ersten Spiegelfläche (6) eine Kollimieroptik (12) nachgeordnet ist.

10. Vorrichtung nach Anspruch 9, bei der zwischen Kollimieroptik (12) und Fokussieroptik (14) ein schwenkbar um eine zur Längsrichtung (16) parallele Drehachse (39) angeordneter Umlenkspiegel (38) vorgesehen ist.

11. Vorrichtung nach Anspruch 9, bei der zwischen Kollimieroptik (12) und Fokussieroptik (14) ein drehbar um eine zur Längsrichtung (16) parallele Drehachse (43) angeordneter Polygonspiegel (42) vorgesehen ist.

12. Vorrichtung nach einem der vorhergehenden Ansprüche, bei der eine Mehrzahl von Ablenkspiegeln (4) voneinander beabstandet auf einer gemeinsamen Welle angeordnet sind und auf jeden Ablenkspiegel (4) ein Laserstrahl (LS) gerichtet ist.

13. Vorrichtung nach einem der vorhergehenden Ansprüche, bei der im Strahlengang des von der zumindest einen Spiegelfläche (6) reflektierten Laserstrahls (LS) ein diffraktives optisches Element zum Erzeugen eines Mehrfachstrahls angeordnet ist.

14. Vorrichtung nach einem der vorhergehenden Ansprüche, mit einer Einrichtung (20) zum Steuern der Laserleistung und der Rotationsgeschwindigkeit (w) des Ablenkspiegels (4) in Abhängigkeit von der Geschwindigkeit (v) der Materialbahn (B).

## Claims

1. Device for forming grooves or slits separated from each other in a longitudinal direction (16) in a sheet of material (B) moved in this longitudinal direction (16) using a laser beam (LS), having a laser beam source (2) for generating a continuous laser beam (LS), an absorber (24) and a deflection mirror (4) arranged rotatably around an axis of rotation (10) and displaceable in a direction of said axis of rotation (10), having at least one first mirror face (6) the sectional line of which forms a circular arc around said axis of rotation (10) with a sectional plane defined perpendicularly with respect to said axis of rotation (10), with an angular extent (α) of said circular arc varying in dependence on the axial position of said sectional plane, and said mirror face (6) deflecting the laser beam (LS) into a first direction, said deflection mirror having at least one second mirror face (8) disposed to deflect the laser beam in different directions from the absorber (24), and having a focusing optic (14) for focusing the laser beam (LS) reflected by the first mirror face (6) onto the sheet of material (B).

2. Device according to claim 1, wherein the first and second mirror faces (6, 8) directly adjoin each other.

3. Device according to claim 1 or 2, wherein the arc angle (α) of the first mirror face (6) decreases continuously in a direction parallel to the axis of rotation (10).

4. Device according to claim 1, 2 or 3, wherein the second mirror face (8) is planar and orientated with an inclination relative to the axis of rotation (10).

5. Device according to one of the preceding claims, the deflection mirror (4) of which has a plurality of first mirror faces (6), in between which there is a respective second mirror face (8).

6. Device according to one of the preceding claims, wherein the focusing optic (14) comprises a toroidal lens.

7. Device according to one of the preceding claims, wherein an acousto-optic modulator (34) is arranged in the beam path of the laser beam (LS) spreading out towards the deflection mirror (4) or reflected by the first mirror face (6).

8. Device according to one of the preceding claims, wherein the laser beam (LS) generated by the laser beam source (2) is focused in a first focal spot (F₁), in which the first mirror face (6) is at least approximately arranged.

9. Device according to claim 8, wherein a collimation optic (12) is arranged downstream of the at least one first mirror face (6).

10. Device according to claim 9, wherein a deflection mirror (38) is provided pivotally around an axis of rotation (39) parallel to the longitudinal direction (16), arranged between the collimation optic (12) and the focusing optic (14).

11. Device according to claim 9, wherein a polygonal mirror (42) is provided rotatably around an axis of rotation (43) parallel to the longitudinal direction (16), arranged between the collimation optic (12) and the focusing optic (14).

12. Device according to one of the preceding claims, wherein a plurality of deflection mirrors (4) are arranged spaced apart from each other on a common shaft, and wherein a laser beam (LS) is directed onto each deflection mirror (4).

13. Device according to one of the preceding claims, wherein a diffractive optical element is arranged in the beam path of the laser beam (LS) reflected by the at least one mirror face (6) for generating a multiple beam.

14. Device according to one of the preceding claims, having a unit (20) for controlling the laser output and the rotational speed (w) of the deflection mirror (4), dependent on the speed (v) of the sheet of material (B).

## Revendications

1. Dispositif pour ménager des rainures ou des fentes à distance les unes des autres dans une direction (16) longitudinale dans une bande (B) de matière déplacée dans cette direction (16) longitudinale, comprenant un faisceau (LS) laser ayant une source (2) de rayonnement laser pour la production d'un faisceau (LS) laser continu, un absorbeur (24) et un miroir (4) de déviation, qui est monté tournant autour un axe (10) de rotation et coulissant dans la direction de celui-ci et qui a au moins une première surface (6) de miroir dont la ligne d'intersection avec un plan de coupe perpendiculaire à l'axe (10) de rotation forme un arc circulaire autour de l'axe (10) de rotation, dont l'angle (α) d'arc varie en fonction de la position axiale du plan de coupe, et qui dévie le faisceau (LS) laser dans une première direction, ainsi qu'au moins une deuxième surface (8) de miroir, qui dévie le faisceau laser vers l'absorbeur (24) dans une deuxième direction qui s'en écarte, et comprenant une optique (14) de focalisation pour focaliser sur la bande (B) de matière, le faisceau (LS) laser réfléchi par la première surface (6) du miroir.

2. Dispositif suivant la revendication 1, dans lequel la première et la deuxième surfaces (6, 8) du miroir sont immédiatement voisines.

3. Dispositif suivant la revendication 1 ou 2, dans lequel l'angle (α) d'arc de la première surface (6) du miroir diminue constamment dans une direction parallèle à l'axe (10) de rotation.

4. Dispositif suivant la revendication 1, 2 ou 3, dans lequel la deuxième surface (6) du miroir est plane et est inclinée par rapport à l'axe (10) de rotation.

5. Dispositif suivant l'une des revendications précédentes, dont le miroir (4) de déviation a une multiplicité de premières surfaces (6) de miroir, entre lesquelles se trouve respectivement une deuxième surface (8) de miroir.

6. Dispositif suivant l'une des revendications précédentes, dans lequel l'optique (14) de focalisation comprend une lentille toroïdale.

7. Dispositif suivant l'une des revendications précédentes, dans lequel un modulateur (34) acousto-optique est monté dans le trajet du faisceau (LS) laser se propageant vers le miroir (4) de déviation ou réfléchi par la première surface (6) du miroir.

8. Dispositif suivant l'une des revendications précédentes, dans lequel le faisceau (LS) laser produit par la source (2) de faisceau laser est focalisé en un premier foyer (F_{I}) où la première surface (6) du miroir est placée au moins à peu près.

9. Dispositif suivant la revendication 8, dans lequel une optique (12) de collimation est montée après la au moins une première surface (6) du miroir.

10. Dispositif suivant la revendication 9, dans lequel un miroir (38) de renvoi, monté autour d'un axe (39) de rotation parallèle à la direction (16) longitudinale, est prévu entre l'optique (12) de collimation et l'optique (14) de focalisation.

11. Dispositif suivant la revendication 9, dans lequel un miroir (42) polygonal, monté tournant autour d'un axe (43) de rotation parallèle à la direction (16) longitudinale, est prévu entre l'optique (12) de collimation et l'optique (14) de focalisation.

12. Dispositif suivant l'une des revendications précédentes, dans lequel une multiplicité de miroirs (4) de déviation sont montés à distance les uns des autres sur un arbre commun et un faisceau (LS) laser est dirigé sur chaque miroir (4) de déviation.

13. Dispositif suivant l'une des revendications précédentes, dans lequel un élément optique de diffraction pour la production d'un faisceau multiple est monté dans le trajet du faisceau (LS) laser réfléchi par la au moins une surface (6) du miroir.

14. Dispositif suivant l'une des revendications précédentes, comprenant un dispositif (20) pour régler la puissance laser et la vitesse (w) de rotation du miroir (4) de déviation en fonction de la vitesse (v) de la bande (B) de matière.
